# EUROPÄISCHE PATENTSCHRIFT

(11) **EP 1 717 260 B1**
(45) Veröffentlichungstag und Bekanntmachung des Hinweises auf die Patenterteilung: **17.10.2007**
(21) Anmeldenummer: 06006038.1
(22) Anmeldetag: 23.03.2006
(51) Int. Cl.: C08G 77/38, C08G 77/18, C08G 77/12, C08G 77/22

(54) **Verfahren zur Herstellung von Triorganosiloxygruppen aufweisenden Organopolysiloxanen**
Process for the preparation of organopolysiloxanes having triorganosiloxy groups
Procédé de préparation d'organopolysiloxanes contenant des groupes triorganosiloxy

(30) Priorität: 21.04.2005 DE 102005018629
(43) Veröffentlichungstag der Anmeldung: 02.11.2006
(73) Patentinhaber: Wacker Chemie AG, 81737 München (DE)
(72) Erfinder: Ochs, Christian, Dr., 84489 Burghausen (DE)
(74) Vertreter: Deffner-Lehner, Maria

(56) Entgegenhaltungen:
- DE-B- 1 246 251
- DE-B- 1 259 886
- US-A- 3 271 360
- GUO PING CAI ET AL: "SYNTHESIS OF POLYMETHYL(TRIMETHYLSILOXY)SILOXANE BY ANIONIC RING-OPENING POLYMERIZATION OF 1,3,5-TRIMETHYL-1,3,5- TRIS(TRIMETHYLSILOXY)CYCLOTRISILOXANE" MACROMOLECULES, ACS, WASHINGTON, DC, US, Bd. 33, Nr. 17, 22. August 2000 (2000-08-22), Seiten 6310-6314, XP001050864 ISSN: 0024-9297
- PATENT ABSTRACTS OF JAPAN Bd. 1995, Nr. 02, 31. März 1995 (1995-03-31) -& JP 06 329804 A (SHIN ETSU CHEM CO LTD), 29. November 1994 (1994-11-29)
- G.H. BARNES ET AL: "The Preparation of Organosilanols via Metal-Catalyzed Reaction of Organosilicon Hydrides with Water" J. ORG. CHEM., Bd. 31, 1966, Seiten 885-887, XP002382361

## Beschreibung

Die Erfindung betrifft ein Verfahren zur Herstellung von Triorganosiloxygruppen aufweisenden Organopolysiloxanen, insbesondere von linearen, kammförmig mit Triorganosiloxygruppen, insbesondere Vinyldimethylsiloxygruppen, funktionalisierten Organopolysiloxanen.

Wie allgemein bekannt ist, lassen sich Organosiloxancopolymere im einfachsten Fall durch die Kondensationsreaktion zwischen zwei silanolgruppenhaltigen Reaktionspartnern herstellen. Der Reaktionsverlauf ist jedoch nicht spezifisch, da parallel zum gewünschten Heterokondensationsprozess auch die Homopolymerisation der Reaktanden mit sich selbst stattfindet. Als Ergebnis wird daher ein statistisches Gemisch aus dem gewünschten Copolymer und den Homopolymerisationsprodukten erhalten. Der klassische Kondensationsprozess ist daher nicht dazu geeignet, selektiv lineare, kammförmig mit Organosiloxy-Gruppen funktionalisierte Organopolysiloxane aufzubauen.

Gleiches gilt für die Einführung von T-Einheiten über Equilibrierungsprozesse, da auch hier die Verteilung der T-Einheiten rein statistisch erfolgt. Bei den Reaktionsprodukten handelt es sich daher eher um ein Gemisch aus mehr oder weniger stark verzweigten und teilverbrückten Polymeren als um ein Polymer mit definiert einheitlicher Struktur.

In der dem Fachmann bekannten Literatur wurde daher eine Vielzahl an sogenannten "nichthydrolytischen" Reaktionen vorgeschlagen, mit denen eine selektive Knüpfung von Si-O-Si-Bindungen möglich ist. Von den aufgezeigten Funktionalisierungswegen sind jedoch für die Herstellung,der Zielverbindungen in technischem Maßstab aus verschiedenen Gründen, wie z. B. Rohstoffverfügbarkeit, Selektivität der Umsetzung, Ausbeute, Reaktionsdauer oder spezielle Anlagenanforderungen, nur einige wenige geeignet.

Ein Beispiel ist die sauer oder alkalisch katalysierte Dehydrokondensation zwischen SiH-haltigen Organopolysiloxanen und SiOH-haltigen Organosiliciumverbindungen. Die Reaktion ist jedoch oftmals in nicht unerheblichem Maße von Equilibrierungen und der teilweisen Fragmentierung der Polymerhauptkette des Edukts begleitet, so dass die erhaltenen Produkte hinsichtlich ihrer Struktur nicht einheitlich sind. Darüber hinaus stellen die begrenzte Stabilität und technische Verfügbarkeit der für die Synthese der oben genannten Zielverbindungen benötigten Silanole einen zusätzlichen Nachteil dar, so dass auch die analoge übergangsmetallkatalysierte Dehydrokondensation auf Basis von Edelmetallkatalysatoren hier keinen technisch zufrieden stellenden Ausweg bieten kann. Bei letzterem Verfahren ist zudem von Nachteil, dass die eingesetzten Edelmetallkatalysatoren, weil nicht oder nur mit erheblichem Aufwand zurückgewinnbar, im Produkt verbleiben, was zu unerwünschten Effekten bei der Weiterverarbeitung oder Anwendung der Produkte führen kann.

Einen möglichen Ausweg bietet der von Deforth und Mignani in US 2003/0139287 gelehrte Ansatz. Hier führt eine Bor-katalysierte Vernetzung von SiH-haltigen Organopolysiloxanen mit silanolterminierten Polydimethylsiloxanen unter Wasserstoffabspaltung zu Siliconelastomeren. Prinzipiell sollte der Prozess zwar auch auf die Synthese der eingangs genannten Zielverbindungen übertragbar sein. Die von den Autoren bevorzugt verwendeten Borkatalysatoren, insbesondere Tris(pentafluorphenyl)bor, sind aber industriell bislang wenig verbreitet und dementsprechend teuer. Weiterhin verbleiben die verwendeten Katalysatoren im Reaktionsprodukt, was aber aus den bereits oben genannten Gründen unerwünscht ist.

Einen ähnlichen Weg beschreiben Rubinsztajn und Cella in US 2004/0127668 und Polymer Preprints 2004, 45(1), 635. Hier werden unter Lewis-Säure-Katalyse SiH-haltige Silane oder Siloxane mit Alkoxysilanen unter Abspaltung eines leicht flüchtigen Kohlenwasserstoffrestes und gleichzeitiger Knüpfung einer Si-O-Si-Bindung miteinander umgesetzt. Das Verfahren hat jedoch den Nachteil, dass die verwendeten Katalysatoren, wie beispielsweise FeCl₃, AlCl₃, ZnCl₂, ZnBr₂ oder BF₃, entweder in Siloxanen unlöslich sind und damit eine geringe Aktivität aufweisen, oder aber, wie z. B. das bevorzugt verwendete Tris(pentafluorphenyl)bor, sehr teuer sind und am Ende der Umsetzung ebenfalls im Reaktionsprodukt verbleiben.

Es bestand daher die Aufgabe, ein Verfahren bereitzustellen, das die oben genannten Nachteile nicht aufweist und welches die selektive Synthese von linearen, kammförmig mit Triorganosiloxygruppen, insbesondere Vinyldimethylsiloxygruppen, funktionalisierten Organopolysiloxanen erlaubt.
Die Aufgabe wird durch die Erfindung gelöst.

Gegenstand der Erfindung ist ein Verfahren zur Herstellung von Triorganosiloxygruppen aufweisenden Organopolysiloxanen der allgemeinen Formel 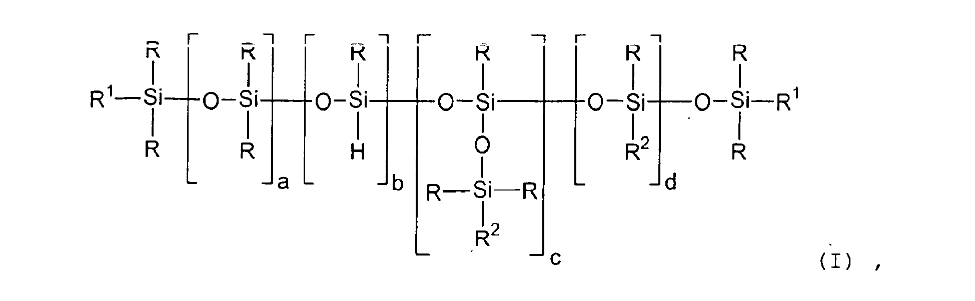 wobei R einen einwertigen, SiC-gebundenen, gegebenenfalls substituierten Kohlenwasserstoffrest mit 1 bis 18 Kohlenstoffatomen bedeutet,
R¹ R oder R³ bedeutet, und
R² R oder R³, vorzugsweise R³, bedeutet, wobei
R³ einen einwertigen, SiC-gebundenen Kohlenwasserstoffrest mit terminaler aliphatischer Kohlenstoff-Kohlenstoff-Doppelbindung mit 2 bis 8 Kohlenstoffatomen je Rest bedeutet,
a eine ganze Zahl von 80 bis 1000, vorzugsweise 80 bis 500, bevorzugt 100 bis 200, ist,
b eine ganze Zahl von 0 bis 100, vorzugsweise 0 bis 50, bevorzugt 0 bis 10, besonders bevorzugt 0, ist
c eine ganze Zahl von 1 bis 100, vorzugsweise 1 bis 10, bevorzugt 1 bis 6, besonders bevorzugt 2 bis 4, ist,
d eine ganze Zahl von 0 bis 100, vorzugsweise 0 bis 10, bevorzugt 0, ist,
indem
(a) in einem ersten Schritt
SiH-Gruppen aufweisende Organopolysiloxane (A) der allgemeinen Formel 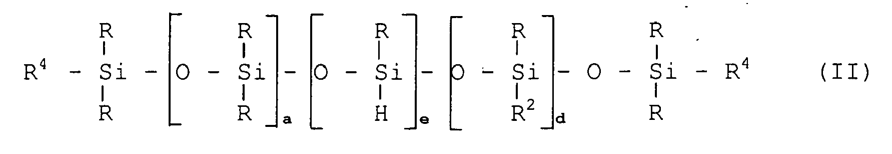 wobei
e die Summe aus b+c bedeutet, und eine ganze Zahl von 1 bis 200, vorzugsweise 1 bis 60, bevorzugt 1 bis 16, besonders bevorzugt 1 bis 4, ist,
R⁴ R oder ein Wasserstoffatom bedeutet,
und R, a, b, c und d die oben jeweils dafür angegebene Bedeutung besitzen,
in Anwesenheit von Katalysatoren (B), ausgewählt aus der Gruppe der Metalle der VIII. Nebengruppe des Periodensystems und deren Verbindungen,
und in Anwesenheit von Cokatalysatoren (K) ausgewählt aus der Gruppe der organischen Säuren und niedermolekularen siliciumorganische Hydride
mit Wasser (C)
zu Zwischenprodukten der allgemeinen Formel 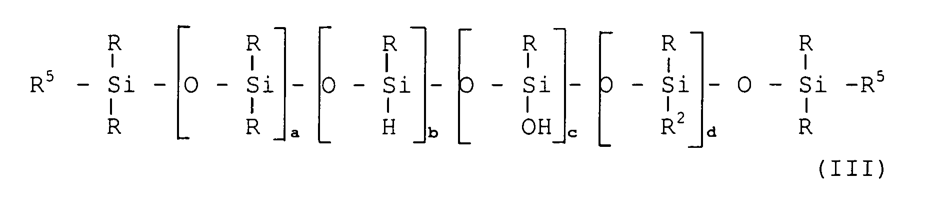 wobei
R⁵ R oder eine HO-Gruppe bedeutet,
und R, a, b, c und d die oben dafür angegebene Bedeutung haben, umgesetzt werden,
und
(b) in einem weiteren Schritt
die so erhaltenen SiOH-Gruppen aufweisenden Zwischenprodukte mit Silanen (D), die eine gegenüber SiOH-Gruppen reaktive Gruppe aufweisen, umgesetzt werden.

Im Rahmen dieser Erfindung sollen die allgemeinen Formeln (I), (II) und (III) so verstanden werden, dass die jeweils genannten Einheiten mit den Indices a, b, c und d in den Formeln (I) und (III) bzw. a, e und d in der Formel (II) in beliebiger Weise, beispielsweise als Block oder statistisch, im Organopolysiloxanmolekül verteilt sein können.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für substituierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest.

Bevorzugt handelt es sich bei dem Rest R um einen einwertigen Kohlenwasserstoffrest mit 1 bis 6 Kohlenstoffatomen, wobei der Methylrest und der Phenylrest besonders bevorzugt sind.

Beispiele für Reste R³ sind Alkenylreste, wie der Vinyl-, 5-Hexenyl-, Cyclohexenyl-, 1-Propenyl-, Allyl-, 3-Butenyl- und 4-Pentenylrest. Bevorzugt handelt es sich bei dem Rest R³ um den Vinylrest.

Bevorzugt werden im Verfahrensschritt (a) als SiH Gruppen aufweisende Organopolysiloxane (A) solche der allgemeinen Formeln 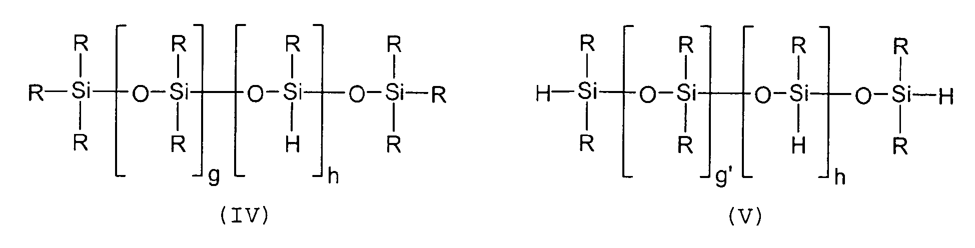 wobei
g 40 bis 1000, vorzugsweise 80 bis 500, bevorzugt 100 bis 200 ist,
g' 38 bis 1000, vorzugsweise 78 bis 500, bevorzugt 98 bis 200 ist,
h 1 bis 6, vorzugsweise 2 bis 4, ist, und
R die oben dafür angegebene Bedeutung hat,
eingesetzt.

Die verwendeten Organopolysiloxane (A) besitzen vorzugsweise eine durchschnittliche Viskosität von 10 bis 100.000 mm²/s, bevorzugt 25 bis 10.000 mm²/s, besonders bevorzugt 50 bis 1.000 mm²/s, bei 25 °C.

Die verwendeten Organopolysiloxane (A) sind handelsübliche Produkte bzw. können nach in der Silicon-Chemie gängigen Verfahren hergestellt werden.

Bei den im Reaktionsschritt (a) als Komponente (B) eingesetzten Metallen der VIII. Nebengruppe des Periodensystems bzw. deren Verbindungen, handelt es sich vorzugsweise um Metalle der Platingruppe bzw. deren Verbindungen, bevorzugt um Ru, Rh, Ir, Pd und Pt bzw. deren Verbindungen.

Gemäß dem erfindungsgemäßen Verfahren können die im Reaktionsschritt (a) eingesetzten Katalysatoren (B) als Feststoffe, als Lösungen in Wasser oder gelöst in beliebigen organischen Lösungsmitteln, oder an Trägermaterialien gebunden eingesetzt werden. Bevorzugt sind an Trägermaterialien gebundene Katalysatoren (B).

Als Trägermaterial eignen sich prinzipiell alle bisher nach dem Stand der Technik für diesen Zweck eingesetzten anorganischen oder organischen Polymere, wie z. B. SiO₂, Al₂O₃, Tonerden, Aktivkohle oder organische Harze. Vorzugsweise handelt es sich bei dem Katalysator-Trägermaterial um Aktivkohle oder Al₂O₃, wobei als Komponente (B) Palladium/Aktivkohle, Palladium/Al₂O₃ und Ruthenium/Aktivkohle, insbesondere Palladium/Aktivkohle bevorzugt ist.

Die Menge des eingesetzten Katalysators (B) richtet sich nach der Anzahl der im Organopolysiloxan (A) enthaltenen SiH-Gruppen. Vorzugsweise wird Katalysator (B) in Mengen von 10 bis 10000 ppm, bevorzugt 20 bis 1000 ppm, besonders bevorzugt 50 bis 500 ppm, berechnet als metallisches Element und bezogen auf das Gesamtgewicht der eingesetzten Organopolysiloxane (A), eingesetzt.

Die verwendeten Katalysatoren (B) sind handelsübliche Produkte bzw. können nach in der metallorganischen Chemie gängigen Verfahren hergestellt werden.

Vorzugsweise wird der an ein Trägermaterial gebundene Katalysator nach beendeter Umsetzung oder am Ende des erfindungsgemäßen Verfahrens durch Filtration wieder entfernt und gegebenenfalls erneut eingesetzt oder rezyklisiert.

Bei den im erfindungsgemäßen Verfahren verwendeten Cokatalysatoren (K) handelt es sich um protonische oder hydridische Verbindungen gemäß Anspruch 1 Beispiele für organische Säuren sind Ameisensäure, Essigsäure, Oxalsäure, Zitronensäure und Ascorbinsäure, und Beispiele für niedermolekulare siliciumorganische Hydride, wie Trimethylsilan, Triethylsilan und Tetramethyldisiloxan.

Bevorzugte Cokatalysatoren (K) sind Ameisensäure, Essigsäure, Oxalsäure, Zitronensäure, Ascorbinsäure, Triethylsilan und Tetramethyldisiloxan, wobei Ameisensäure, Oxalsäure, Ascorbinsäure, Triethylsilan und Tetramethyldisiloxan bevorzugt, Ameisensäure, Triethylsilan und Tetramethyldisiloxan besonders bevorzugt sind.

Die Menge des eingesetzten Cokatalysators (K) richtet sich nach der Menge des verwendeten Katalysators (B). Vorzugsweise wird Cokatalysator (K) in Mengen von 25 bis 1000 mol%, bevorzugt 50 bis 500 mol%, besonders bevorzugt 100 bis 250 mol%, bezogen auf 100 mol% metallisches Element im eingesetzten Katalysator (B), verwendet.

Bei dem erfindungsgemäßen Verfahren werden Cokatalysatoren (K) mitverwendet. Vorzugsweise werden Cokatalysatoren (K) mitverwendet, wenn als Organopolysiloxane (A) solche der allgemeinen Formel IV und V eingesetzt werden, bevorzugt werden Cokatalysatoren (K) mitverwendet, wenn als Organopolysiloxane (A) solche der allgemeinen Formel IV eingesetzt werden, da hierdurch die Reaktionsdauer erheblich verkürzt werden kann, insbesondere wenn nieder-SiH-funktionelle Verbindungen der allgemeinen Formel IV eingesetzt werden.

Im erfindungsgemäßen Verfahren kann als Komponente (C) beliebiges Wasser eingesetzt werden, wobei vollentsalztes Wasser, destilliertes Wasser und gereinigtes Wasser (Aqua purificata) bevorzugt sind, vollentsalztes Wasser besonders bevorzugt ist.

Die Menge der eingesetzten Komponente (C) richtet sich nach der Anzahl der im Organopolysiloxan (A) enthaltenen SiH-Gruppen. Vorzugsweise wird Komponente (C) äquimolar oder im Überschuss bezüglich der im Organopolysiloxan (A) enthaltenen SiH-Gruppen verwendet.

Bevorzugt beträgt die eingesetzte Wassermenge 100 bis 200 mol-%, besonders bevorzugt 100 bis 150 mol-%, insbesondere 100 bis 120 mol-%, je 100 mol-% der im Organopolysiloxan (II) enthaltenen SiH-Gruppen.

Gemäß dem erfindungsgemäßen Verfahren wird der Reaktionsschritt (a) in einem Temperaturbereich von vorzugsweise -10°C bis +150°C, bevorzugt +10°C bis +100°C, besonders bevorzugt +25°C bis +80°C, durchgeführt.

Der Reaktionsschritt (a) des erfindungsgemäßen Verfahrens kann, beispielsweise zur Homogenisierung oder zur Erniedrigung der Viskosität des Reaktionsgemisches, mit oder ohne Lösungsmittel (E) durchgeführt werden, wobei die Anwesenheit von Lösungsmittel bevorzugt ist.

Falls Lösungsmittel (E) zugegen ist, so handelt es sich vorzugsweise um polare, organische Lösungsmittel, welche die Verträglichkeit von Wasser gegenüber der Organopolysiloxan-Phase erhöhen, selbst aber nicht mit den in den Organopolysiloxanen (A) enthaltenen SiH-Gruppen sowie mit den im Silan (D) enthaltenen, gegenüber SiOH-Gruppen reaktiven Gruppen, reagieren. Beispiele für geeignete Lösungsmittel sind Tetrahydrofuran, Dioxan, Dimethoxyethan, wobei Tetrahydrofuran oder Dioxan bevorzugt sind.

Falls Lösungsmittel (E) verwendet wird, so handelt es sich vorzugsweise um Mengen von 1 bis 500 Gew.-Teile, bevorzugt 5 bis 200 Gew.-Teile, besonders bevorzugt 10 bis 100 Gew.-Teile, je 100 Gew.-Teile der eingesetzten Organopolysiloxans (A).

Nach Beendigung des Reaktionsschrittes (a) des erfindungsgemäßen Verfahrens können die erhaltenen Reaktionsprodukte nach beliebigen und bisher bekannten Verfahrensschritten gereinigt und/oder isoliert werden. Falls erwünscht, können nach der Umsetzung beispielsweise flüchtige Komponenten und gegebenenfalls eingesetztes Lösungsmittel durch Destillation, gegebenenfalls unter vermindertem Druck, sowie der an ein Trägermaterial gebundene Katalysator durch Filtration entfernt werden.

Bei den im Reaktionsschritt (a) erfindungsgemäß eingesetzten Komponenten (A), (B) und (K) und gegebenenfalls (E) kann es sich jeweils um eine Art der Komponente wie auch um ein Gemisch aus mindestens zwei Arten der jeweiligen Komponente handeln.

Im zweiten Verfahrensschritt (b) werden vorzugsweise als Silane (D), die eine gegenüber SiOH-Gruppen reaktive Gruppe aufweisen, solche der allgemeinen Formeln

R²ₖR₃₋ₖSiX (VI)

oder

R²ₖR₃₋ₖSi-NR⁶-SiR₃₋ₖR²ₖ (VII),

wobei
X ein Wasserstoffatom, ein Chloratom oder ein Rest der Formel -OH, -OR, oder -NR⁶₂ ist, vorzugsweise ein Chloratom oder ein Rest der Formel -OR ist,
wobei R⁶ R oder ein Wasserstoffatom bedeutet,
R und R² die oben dafür angegebene Bedeutung haben, und
k gleich 1, 2 oder 3 ist,
eingesetzt.

Bevorzugt handelt es sich bei der Komponente (D) um Silane der allgemeinen Formeln (VI) oder (VII), bei denen
k l, R ein Methylrest und R² ein Vinylrest ist.
Besonders bevorzugt sind Vinyldimethylchlorsilan, Vinyldimethylethoxysilan und Vinyldimethyldisilazan.

Bei den verwendeten Silanen (D) handelt es sich um handelsübliche Produkte bzw. sie können nach in der Silicon-Chemie gängigen Verfahren hergestellt werden.

Bei der erfindungsgemäß eingesetzten Komponente (D) kann es sich jeweils um eine Art der Komponente wie auch um ein Gemisch aus mindestens zwei Arten der jeweiligen Komponente handeln.

Die Menge der eingesetzten Komponente (D) richtet sich nach der Anzahl der im Zwischenprodukt der allgemeinen Formel (III) enthaltenen SiOH-Gruppen. Vorzugsweise wird Komponente (D) äquimolar oder im Überschuss bezüglich der im Zwischenprodukt der allgemeinen Formel (III) enthaltenen SiOH-Gruppen verwendet. Bevorzugt beträgt die Menge der eingesetzten Komponente (D) 100 bis 150 mol-%, besonders bevorzugt 100 bis 120 mol-%, insbesondere 100 bis 110 mol-%, je 100 mol-% der im Zwischenprodukt der allgemeinen Formel (III) enthaltenen SiOH-Gruppen.

Bevorzugt werden als Triorganosiloxygruppen aufweisende Organopolysiloxane solche der allgemeinen Formel 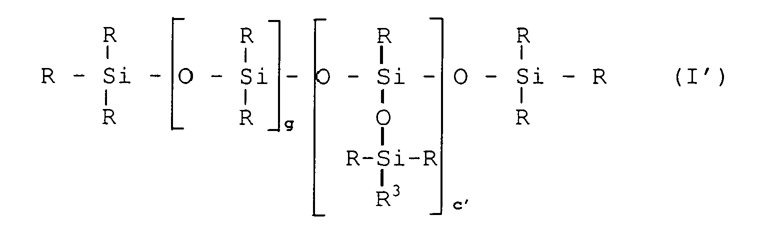 oder 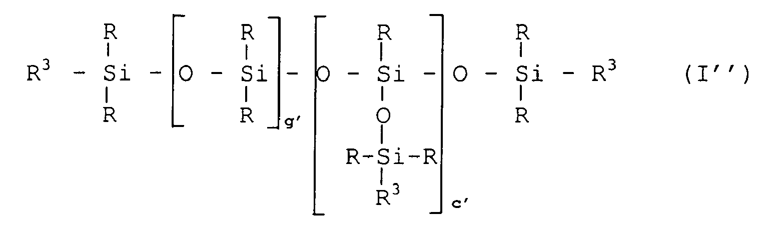 wobei R, R³, g und g' die oben dafür angegebene Bedeutung haben, und
c' 1 bis 6, vorzugsweise 2 bis 4, ist,
erhalten.

Weiterhin können im Reaktionsschritt (b) des erfindungsgemäßen Verfahrens weitere, die Umsetzung unterstützende Hilfsstoffe (F) zugegen sein. Beispiele für geeignete Hilfsstoffe sind Hilfsbasen, wie Alkali- oder Erdalkalisalze von anorganischen oder organischen Säuren (wie z. B. Na₃PO₄, Na₂HPO₄, NaH₂PO₄, Na₂CO₃, NaHCO₃ oder NaOAc) und organische Amine (wie z.B. Triethylamin, Ethyldiisopropylamin, Pyridin, Imidazol, DABCO oder DBN), sowie Kondensations-Katalysatoren, wie organische Säuren (wie z.B. Ameisensäure oder Essigsäure), Phosphorsäure- und Phosphonsäureteilester bzw. deren Gemische (wie z.B. Dibutylphosphat), Übergangsmetalle der I. bis VII. Nebengruppe bzw. deren Verbindungen, und Al-, Sn- oder Bi-Verbindungen.

Die Verwendung von Hilfsstoffen (F), deren Art und Menge richtet sich in der dem Fachmann bekannten Art und Weise nach der Natur der im Reaktionsschritt (b) verwendeten Silane (D) und dem daraus resultierenden Reaktionsmechanismus. Beispielsweise ist bei der Verwendung von Chlorsilanen der allgemeinen Formel (VI) die Verwendung einer der genannten Hilfsbasen in einer Menge von 100 bis 120 mol%, je 100 mol% des verwendeten Silans (D), förderlich. Dagegen erfordert beispielsweise die Verwendung von Disilazanen der allgemeinen Formel (VII) in der Regel den Einsatz von 10 bis 10000 Gew.-ppm, bezogen auf die Menge der Komponente (D), eines entsprechenden Chlorsilans oder einer anorganischen oder organischen Säure, wie z. B. HCl oder p-Toluolsulfonsäure. Weiterhin kann bei Verwendung von Alkoxysilanen der allgemeinen Formel (VI) Reaktionsschritt (b) durch Verwendung von 10 bis 10000 Gew.-ppm, bezogen auf die Menge der Komponente (D), eines organischen Amins beschleunigt werden.

Gemäß dem erfindungsgemäßen Verfahren wird der zweite Reaktionsschritt (b) in einem Temperaturbereich von vorzugsweise -20 bis +200 °C, bevorzugt 0 bis 150 °C, besonders bevorzugt 30 bis 120 °C, durchgeführt.

Der zweite Reaktionsschritt (b) des erfindungsgemäßen Verfahrens kann mit oder ohne Lösungsmittel (G) durchgeführt werden. Dabei kann es sich um Lösungsmittel des Typs (E) oder um Lösungsmittel, welche verschieden von (E) sind, handeln.

Falls Lösungsmittel (G) zugegen ist, beispielsweise zur Viskositätserniedrigung, zwecks besserer Rührbarkeit oder zur Homogenisierung des Reaktionsgemisches, so handelt es sich vorzugsweise um inerte Lösungsmittel, d.h. um solche, die nicht mit dem in den Zwischenprodukten der allgemeinen Formel (III) enthaltenen SiOH-Gruppen sowie mit den im Silan (D) enthaltenen, gegenüber SiOH-Gruppen reaktiven Gruppen, reagieren können. Beispiele für geeignete Lösungsmittel sind Tetrahydrofuran, Dioxan, Toluol, Aceton und Dimethoxyethan, wobei Tetrahydrofuran bevorzugt ist.

Ferner können bei dem erfindungsgemäßen Verfahren weitere Stoffe (H), die an der Umsetzung in den Verfahrensschritten (a) und (b) nicht direkt teilnehmen und die den Reaktionsverlauf nicht negativ beeinflussen, eingesetzt werden.

Beispiele für solche weiteren Stoffe (H) sind Emulgatoren, Phasentransferkatalysatoren, Konservierungsstoffe, antimikrobiell wirksame Substanzen, wie z.B. Bakterizide, Fungizide oder Algizide, Geruchsstoffe, geruchshemmende oder geruchsvermindernde Stoffe, Entschäumer, Rheologieregler, Farbstoffe, Pigmente, Redoxstabilisatoren, flammabweisbar machende Stoffe, Lichtschutzmittel und Hitzestabilisatoren. Bevorzugt werden bei dem erfindungsgemäßen Verfahren keine weiteren Stoffe (H) eingesetzt.

Bei den im Reaktionsschritt (b) erfindungsgemäß eingesetzten Komponenten kann es sich jeweils um eine Art der Komponente wie auch um ein Gemisch aus mindestens zwei Arten der jeweiligen Komponente handeln.

Nach Beendigung des Reaktionsschrittes (b) des erfindungsgemäßen Verfahrens können die erhaltenen Reaktionsprodukte nach beliebigen und bisher bekannten Verfahrensschritten isoliert oder gereinigt werden. Falls erwünscht, können nach der Umsetzung beispielsweise flüchtige Komponenten und gegebenenfalls eingesetztes Lösungsmittel durch Destillation, gegebenenfalls unter vermindertem Druck, sowie der an ein Trägermaterial gebundene Katalysator durch Filtration entfernt werden.

Das erfindungsgemäße Verfahren kann als 2-Stufen-Reaktion mit zwischenzeitlicher Abtrennung des Katalysators (B) und/oder Isolation der Reaktionsprodukte, oder als 2-stufige Eintopfreaktion durchgeführt werden.

Des weiteren kann das erfindungsgemäße Verfahren als homogene 1-Phasenreaktion, als Mehrphasenreaktion oder in Dispersion, wie z.B. Micro- oder Macro-Emulsion, durchgeführt werden. Bevorzugt ist die Durchführung als homogene 1-Phasenreaktion.

Wird das Verfahren als 2-Phasen-Reaktion durchgeführt, was nicht bevorzugt ist, so ist eine möglichst gute Homogenisierung der nicht miteinander mischbaren Phasen und die Schaffung einer großen inneren Reaktionsfläche zu gewährleisten, wie z.B. durch Erzeugen einer durchschnittlichen Teilchengröße von < 500 µm. Die intensive Durchmischung der Reaktionsphasen kann prinzipiell mit allen nach dem Stand der Technik bekannten Mischsystemen, wie z.B. Rührwerken aller Art, Hochgeschwindigkeitsrührwerken, wie z.B. solche erhältlich unter der Marke Ultra-Turrax® oder ähnliches Dissolversystem, mittels Ultraschallsonden oder -bädern, oder - wie z.B. bei kontinuierlicher Reaktionsführung - mit statischen oder bewegten Mischelementen, erfolgen.

Wird das Verfahren in Dispersion durchgeführt, was ebenfalls nicht bevorzugt ist, so können entsprechend Emulgatoren bzw. oberflächenaktive Mittel, wie etwa nichtionische, anionische, kationische oder amphotere Emulgatoren, vorhanden sein, wobei die Herstellung der Dispersion in beliebiger und dem Fachmann bekannter Art und Weise erfolgen kann.

Bei dem erfindungsgemäßen Verfahren werden die eingesetzten Komponenten auf an sich bekannte Art und Weise miteinander vermischt und reagieren gelassen.

Die im Reaktionsschritt (a) erfindungsgemäß eingesetzten Komponenten können hierbei in beliebiger Reihenfolge miteinander vermischt, der Reaktion zugeführt und/oder zur Reaktion gebracht werden. Bei einem sehr exothermen Reaktionsverlauf ist jedoch ein Zudosieren der Komponente (C), gegebenenfalls im Gemisch mit der Komponente (E), zu einem Gemisch bestehend aus den Komponenten (A), (B), ggf. (K) und gegebenenfalls (E) sowie gegebenenfalls (H) bevorzugt.

Im Reaktionsschritt (b) ist das Zudosieren von Komponente (D), gegebenenfalls im Gemisch mit Komponente (G), zum Zwischenprodukt der allgemeinen Formel (III) und Komponente (F), die ggf. im Gemisch mit den Komponenten (E), (G) und/oder (H) vorliegen können, bevorzugt.

Das erfindungsgemäße Verfahren wird vorzugsweise bei einem Druck der umgebenden Atmosphäre, also etwa bei 900 bis 1100 hPa, durchgeführt, es kann aber auch bei höheren und niedrigeren Drücken durchgeführt werden.

Das erfindungsgemäße Verfahren kann absatzweise, halbkontinuierlich oder vollkontinuierlich in dafür geeigneten Reaktorsystemen, wie z.B. Batch-Reaktor, Batch-Reaktor-Kaskade, Loop-Reaktor, Strömungsrohr, Rohrreaktor, Microreaktor, Kreiselpumpen und beliebige Kombinationen hiervon, durchgeführt werden.

An das erfindungsgemäße Verfahren können sich darüber hinaus beliebige weitere Prozessschritte anschließen, mittels derer die gewünschten Eigenschaften der nach dem erfindungsgemäßen Verfahren erhaltenen Organopolysiloxane gezielt eingestellt werden können. Die Durchführung der Prozessschritte orientiert sich dabei grundsätzlich am Stand der Technik und erfolgt in der dem Fachmann bekannten Art und Weise.

Das erfindungsgemäße Verfahren hat den Vorteil, dass es einfach und kostengünstig in der Durchführung ist.

Besonderer Vorteil des erfindungsgemäßen Verfahrens ist, dass es quantitativ, äußerst selektiv und nahezu ohne Nebenreaktionen verläuft. Die gewünschten linearen, kammförmig mit Triorganosiloxygruppen, insbesondere Vinyldimethylsiloxygruppen, funktionalisierten Organopolysiloxane werden daher mit guter Ausbeute und in hoher Reinheit erhalten.

Ein weiterer Vorteil des erfindungsgemäßen Verfahrens ist, dass der im Reaktionsschritt (a) eingesetzte Katalysator (B) auf einfache Art und Weise durch Filtration nahezu vollständig entfernt werden kann, und somit keine unerwünschten Katalysatormengen im Reaktionsprodukt verbleiben. Darüber hinaus kann der zuruckgewonnene Katalysator aufgearbeitet, wiederverwendet und/oder dem Wertstoffkreislauf wieder zugeführt werden. Das erfindungesgemäße Verfahren ist demnach nachhaltig umweltverträglich und ressourcensparend.

Das erfindungsgemäße Verfahren hat desweiteren den Vorteil, dass es universell einsetzbar ist, und sowohl für eine kontinuierliche wie diskontinuierliche Prozessführung gleichermaßen geeignet ist.

In den nachstehend beschriebenen Beispielen beziehen sich alle Angaben von Teilen mit Prozentsätzen, falls nicht anders angegeben, auf das Gewicht. Des Weiteren beziehen sich alle Viskositätsangaben auf eine Temperatur von 20°C. Sofern nicht anders angegeben, werden die nachstehenden Beispiele bei einem Druck der umgebenden Atmosphäre, also bei etwa 1000 hPa, und Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

### Beispiel 1 (nicht erfindungsgemäß)

2 g Wasser und 100 g eines linearen Siloxans, bestehend aus Trimethylsiloxy-, Dimethylsiloxy- und Hydrogenmethylsiloxy-Einheiten mit einem Aktivwasserstoffgehalt von 0,085 % und einer Viskosität von 95 mm²/s, werden in 70 g Tetrahydrofuran gelöst und mit 0,25 g Palladium/Aktivkohle (Pd/C, 10 Gew.-% Palladium) versetzt. Man heizt auf 70 °C auf und rührt 5 Stunden bei dieser Temperatur, wobei Wasserstoffentwicklung stattfindet. Anschließend werden alle flüchtigen Bestandteile durch Destillation bei 80 °C im Vollvakuum entfernt und der Katalysator durch Filtration abgetrennt. Man erhält ein farbloses, klares Produkt mit einer Viskosität von 130 mm²/s und einem Silanolgruppengehalt von 84,9 mmol/100g. Die NMR-spektroskopische Untersuchung belegt die quantitative Bildung von lateral an die Siloxanhauptkette gebundenen Silanolgruppen (29 Si-NMR: δ= ca. -56 bis -58 ppm).

100 g des so erhaltenen Siloxans und 11,14 g (93,5 mmol) Triethylamin werden in 50 g Tetrahydrofuran gelöst. Anschließend kühlt man das Reaktionsgemisch auf 15 °C ab und versetzt unter gutem Rühren mit 9,68 g (89,25 mmol) Trimethylchlorsilan. Nach beendeter Zugabe erwärmt man das Reaktionsgemisch auf Rückflusstemperatur (ca. 70 °C) und rührt 60 Minuten bei dieser Temperatur. Anschließend werden alle flüchtigen Bestandteile durch Destillation bei 80 °C im Vollvakumm, sowie das Ammoniumsalz durch Filtration entfernt. Man erhält ein farbloses klares Öl mit einer Viskosität von 145 mm²/s. Die NMR-spektroskopische Untersuchung belegt die Bildung eines Produktes, welches lateral an die Siloxanhauptkette gebundene Trimethylsiloxygruppen besitzt (29 Si-NMR: δ= ca. -65,5 bis -66,5 ppm), und das frei von über T-Einheiten verbrückten Polymerketten (29 Si-NMR: δ= ca. -67 bis -69 ppm) ist.

### Beispiel 2

4,6 g Wasser und 400 g eines linearen Siloxans, bestehend aus Trimethylsiloxy-, Dimethylsiloxy- und Hydrogenmethylsiloxy-Einheiten mit einem Aktivwasserstoffgehalt von 0,051 % und einer Viskosität von 250 mm²/s, werden in 280 g Tetrahydrofuran gelöst und mit 1,04 g Palladium/Aktivkohle (Pd/C, 10 Gew.-% Palladium) sowie 0,104 g Triethylsilan versetzt. Man rührt bei Raumtemperatur, wobei sich das Reaktionsgemisch unter Wasserstoffentwicklung langsam auf ca. 30 °C erwärmt. Nach Abklingen der leicht exothermen Reaktion rührt man 1 Stunde bei 30 °C nach, heizt anschließend auf Rückflusstemperatur (ca. 70 °C) auf und lässt weitere 4 Stunden bei dieser Temperatur reagieren. Anschließend werden alle flüchtigen Bestandteile durch Destillation bei 80 °C im Vollvakuum entfernt und der Katalysator durch Filtration abgetrennt. Man erhält ein farbloses, klares Produkt mit einer Viskosität von 290 mm²/s und einem Silanolgruppengehalt von 50,9 mmol/100g. Die NMR-spektroskopische Untersuchung belegt die quantitative Bildung von lateral an die Siloxanhauptkette gebundenen Silanolgruppen.

100 g des so erhaltenen Siloxans und 16,24 g (160,5 mmol) Triethylamin werden in 100 g Tetrahydrofuran gelöst. Anschließend kühlt man das Reaktionsgemisch auf 10 °C ab und versetzt unter gutem Rühren mit 14,76 g (122,3 mmol) Vinyldimethylchlorsilan. Nach beendeter Zugabe erwärmt man das Reaktionsgemisch auf Rückflusstemperatur (ca. 75 °C) und rührt 60 Minuten bei dieser Temperatur. Anschließend werden alle flüchtigen Bestandteile durch Destillation bei 80 °C im Vollvakumm, sowie das Ammoniumsalz durch Filtration entfernt. Man erhält ein farbloses klares Öl mit einer Viskosität von 315 mm²/s und einem Vinylgruppengehalt von 51 mmol/100g.

### Beispiel 3 (nicht erfindungsgemäß)

13,4 g Wasser und 625 g eines linearen Siloxans, bestehend aus Hydrogendimethylsiloxy-, Dimethylsiloxy- und Hydrogenmethylsiloxy-Einheiten mit einem Aktivwasserstoffgehalt von 0,084 % und einer Viskosität von 230 mm²/s, werden in 560 g Tetrahydrofuran gelöst und mit 2,09 g Palladium/Aktivkohle (Pd/C, 10 Gew.-% Palladium) versetzt. Man rührt bei Raumtemperatur, wobei sich das Reaktionsgemisch unter Wasserstoffentwicklung langsam auf ca. 30 °C erwärmt. Nach Abklingen der leicht exothermen Reaktion rührt man 1 Stande bei 30 °C nach, heizt anschließend auf Rückflusstemperatur (ca. 70 °C) auf und lässt weitere 2 Stunden bei dieser Temperatur reagieren. Anschließend werden alle flüchtigen Bestandteile durch Destillation bei 80 °C im Vollvakuum entfernt und der Katalysator durch Filtration abgetrennt. Man erhält ein farbloses, klares Produkt mit einer Viskosität von 285 mm²/s und einem Silanolgruppengehalt von 84,1 mmol/100g. Die NMR-spektroskopische Untersuchung belegt die quantitative Bildung von endständig und lateral an die Siloxanhauptkette gebundenen Silanolgruppen.

600 g des so erhaltenen Siloxans und 64 g (632,5 mmol) Triethylamin werden in 300 g Tetrahydrofuran gelöst. Anschließend kühlt man das Reaktionsgemisch auf 10 °C ab und versetzt unter gutem Rühren mit 58,18 g (483 mmol) Vinyldimethylchlorsilan. Nach beendeter Zugabe erwärmt man das Reaktionsgemisch auf Rückflusstemperatur (ca. 80 °C) und rührt 60 Minuten bei dieser Temperatur. Anschließend werden alle flüchtigen Bestandteile durch Destillation bei 100 °C im Vollvakumm sowie das Ammoniumsalz durch Filtration entfernt. Man erhält ein farbloses klares Öl mit einer Viskosität von 325 mm²/s und einem Vinylgruppengehalt von 83,9 mmol/100g.

### Beispiel 4

5,3 g Wasser und 250 g eines linearen Siloxans, bestehend aus Hydrogendimethylsiloxy-, Dimethylsiloxy- und Hydrogenmethylsiloxy-Einheiten mit einem Aktivwasserstoffgehalt von 0,084 % und einer Viskosität von 230 mm²/s, werden in 225 g Tetrahydrofuran gelöst und mit 0,85 g Palladium/Aktivkohle (Pd/G, 10 Gew.-% Palladium) sowie 37 mg Ameisensäure versetzt. Man rührt bei Raumtemperatur, wobei sich das Reaktionsgemisch unter Wasserstoffentwicklung langsam auf ca. 30 °C erwärmt. Nach Abklingen der leicht exothermen Reaktion rührt man 1 Stunde bei 30 °C nach, heizt anschließend auf Rückflusstemperatur (ca. 70 °C) auf und lässt weitere 2 Stunden bei dieser Temperatur reagieren. Anschließend werden alle flüchtigen Bestandteile durch Destillation bei 80 °C im Vollvakuum entfernt und der Katalysator durch Filtration abgetrennt. Man erhält ein farbloses, klares Produkt mit einer Viskosität von 294 mm²/s und einem Silanolgruppengehalt von 84,0 mmol/100g. Die NMR-spektroskopische Untersuchung belegt die quantitative Bildung von endständig und lateral an die Siloxanhauptkette gebundenen Silanolgruppen.

200 g des so erhaltenen Siloxans werden mit 31,1 g (168,1 mmol) Bis-Vinyldimethylsilazan sowie 0,03 g Vinyldimethylchlorsilan versetzt und auf 120 °C erwärmt. Man rührt 4 Stunden bei dieser Temperatur. Anschließend werden 3,5 g Wasser zugegeben und alle flüchtigen Bestandteile durch Destillation bei 120 °C im Vollvakumm entfernt. Man erhält ein farbloses klares Öl mit einer Viskosität von 315 mm²/s und einem Vinylgruppengehalt von 83,5 mmol/100g.

### Vergleichsbeispiel

110 g eines linearen Siloxans, bestehend aus Trimethylsiloxy-, Dimethylsiloxy- und Hydrogenmethylsiloxy-Einheiten mit einem Aktivwasserstoffgehalt von 0,028 % und einer Viskosität von 430 mm²/s, werden auf 0 °C abgekühlt und bei dieser Temperatur mit 0,121 g einer 10%igen wässrigen KOH sowie 4,712 g (46,2 mmol) Vinyldimethylsilanol versetzt. Man rührt 3 Stunden bei dieser Temperatur, erwärmt das Gemisch auf 100 °C und lässt weitere 2 Stunden reagieren. Anschließend werden 0,014 g Essigsäure (100 %) zugegeben und alle flüchtigen Bestandteile durch Destillation bei 130 °C im Vollvakuum entfernt. Nach Filtration erhält man ein klares farbloses Produkt mit einer Viskosität von 150 mm²/s. Die NMR-spektroskospische Untersuchung des Reaktionsproduktes belegt die Bildung eines Gemisches aus Polymeren bestehend aus Trimethylsiloxy-, Vinyldimethylsiloxy-, Dimethylsiloxy- und (*cyclo*-Trisiloxanyl)-dimethylsiloxyeinheiten. Die Bildung der gewünschten (Vinyldimethylsiloxy)-methylsiloxy-Einheiten wird dagegen nur in untergeordnetem Maße beobachtet.

### Beispiel 5

1,1 g Wasser und 100 g eines linearen Siloxans, bestehend aus Trimethylsiloxy-, Dimethylsiloxy- und Hydrogenmethylsiloxy-Einheiten mit einem Aktivwasserstoffgehalt von 0,051 % und einer Viskosität von 245 mm²/s, werden in 70 g Tetrahydrofuran gelöst und mit 0,26 g Palladium/Aktivkohle (Pd/C, 10 Gew.-% Palladium) versetzt. Weiterhin wird dem Reaktionsgemisch eine equimolare Menge (bezogen auf die Menge metallischen Palladiums in der Pd/C) Cokatalysator gemäß Tabelle 1 zugegeben. Man rührt bei Raumtemperatur, wobei sich das Reaktionsgemisch unter Wasserstoffentwicklung langsam auf ca. 25 bis 30 °C erwärmt. Anschließend heizt man auf Rückflusstemperatur (ca. 70 °C) auf und lässt weitere 2 Stunden bei dieser Temperatur reagieren, wobei der Reaktionsumsatz bezüglich SiH NMR-spekroskopisch verfolgt wird (siehe Tabelle 1). Danach werden alle flüchtigen Bestandteile durch Destillation bei 80 °C im Vollvakuum entfernt und der Katalysator durch Filtration abgetrennt. Man erhält ein farbloses, klares Produkt mit lateral an die Siloxanhauptkette gebundenen Silanolgruppen.

**Tabelle 1.**

| | **5a*** | **5b** | **5c** | **5d** | **5e** | **5f** |
|---|---|---|---|---|---|---|
| Co-katalysator | - | Ameisensäure | Essigsäure | Oxalsäure Dihydrat | Triethylsilan | Tetramethyldisiloxan |
| Menge (mg) | - | 11,3 | 14,6 | 30,8 | 26,0 | 16,4 |
| Umsatz nach 1h / 30 °C | 34 % | 87 % | 49 % | 72 % | 62 % | 83 % |
| Umsatz nach 1h / 70 °C | 65 % | 100 % | 91 % | 100 % | 85 % | 100 % |
| Umsatz nach 2h / 70 °C | 87 % | 100 % | 98 % | 100 % | 100 % | 100 % |
| Produkt-Viskosität [mm²/s] | 305 | 315 | 310 | 314 | 316 | 318 |
| SiOH-Gehalt im Produkt [mmol/100g] | 44,3 | 51,1 | 51,0 | 50,8 | 51,0 | 50,9 |

| | | | | | | |
|---|---|---|---|---|---|---|
| * nicht erfindungsgemäß | | | | | | |

Jeweils 100 g des nach **5b**, **5d**, **5e** oder **5f** erhaltenen Siloxans und 16,24 g (160,5 mmol) Triethylamin werden in 100 g Tetrahydrofuran gelöst. Anschließend kühlt man das Reaktionsgemisch auf 10 °C ab und versetzt unter gutem Rühren mit 14,76 g (122,3 mmol) Vinyldimethylchlorsilan. Nach beendeter Zugabe erwärmt man das Reaktionsgemisch auf Rückflusstemperatur (ca. 75 °C) und rührt 60 Minuten bei dieser Temperatur. Anschließend werden alle flüchtigen Bestandteile durch Destillation bei 80 °C im Vollvakumm, sowie das Ammoniumsalz durch Filtration entfernt. Man erhält ein farbloses klares Öl mit einer Viskosität von durchschnittlich 310 mm²/s und einem Vinylgruppengehalt von durchschnittlich 50.9 mmol/100g.

### Beispiel 6

1,7 g Wasser und 100 g eines linearen Siloxans, bestehend aus Trimethylsiloxy-, Dimethylsiloxy- und Hydrogenmethylsiloxy-Einheiten mit einem Aktivwasserstoffgehalt von 0,085 % und einer Viskosität von 95 mm²/s, werden in 65 g Tetrahydrofuran gelöst und mit 0,125 g Palladium/Aktivkohle (Pd/C, 10 Gew.-% Palladium) sowie 28 mg Ameisensäure versetzt. Man heizt auf 70 °C auf und rührt 3 Stunden bei dieser Temperatur, wobei Wasserstoffentwicklung stattfindet. Anschließend werden alle flüchtigen Bestandteile durch Destillation bei 80 °C im Vollvakuum entfernt und der Katalysator durch Filtration abgetrennt. Man erhält ein farbloses, klares Produkt mit einer Viskosität von 126 mm²/s und einem Silanolgruppengehalt von 84,7 mmol/100g. Die NMR-spektroskopische Untersuchung belegt die quantitative Bildung von lateral an die Siloxanhauptkette gebundenen Silanolgruppen.

Man vermischt 100 g des so erhaltenen Siloxans mit 14,19 g (122,3 mmol) Vinyldimethylmethoxysilan und 0,9 g (12,2 mmol) Propylendiamin. Anschließend erwärmt man das Reaktionsgemisch auf 120 °C und rührt 3 Stunden bei dieser Temperatur. Danach werden alle flüchtigen Bestandteile durch Destillation bei 120 °C im Vollvakumm entfernt. Man erhält ein farbloses klares Öl mit einer Viskosität von 130 mm²/s und einem Vinylgruppengehalt von 84,1 mmol/100g.

## Patentansprüche

1. Verfahren zur Herstellung von Triorganosiloxygruppen aufweisenden Organopolysiloxanen der allgemeinen Formel 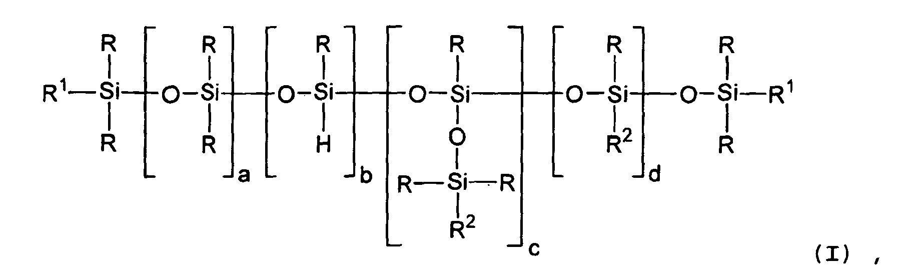
wobei R einen einwertigen, SiC-gebundenen, von aliphatischen Kohlenstoff-Kohlenstoff-Doppelbindungen freien, gegebenenfalls substituierten Kohlenwasserstoffrest mit 1 bis 18 Kohlenstoffatomen bedeutet,
R¹ R oder R³ bedeutet, und
R² R oder R³ bedeutet, wobei
R³ einen einwertigen, SiC-gebundenen Kohlenwasserstoffrest mit terminaler aliphatischer Kohlenstoff-Kohlenstoff-Doppelbindung mit 2 bis 8 Kohlenstoffatomen je Rest bedeutet,
a eine ganze Zahl von 80 bis 1000,
b eine ganze Zahl von 0 bis 100,
c eine ganze Zahl von 1 bis 100,
d eine ganze Zahl von 0 bis 100,
indem
(a) in einem ersten Schritt
SiH-Gruppen aufweisende Organopolysiloxane (A) der allgemeinen Formel 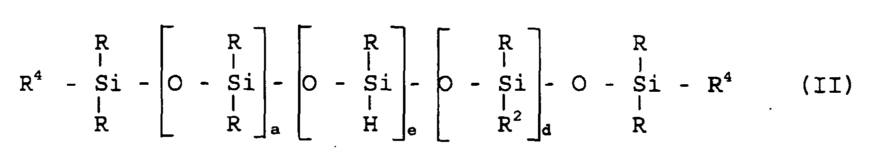 wobei
e die Summe aus b+c bedeutet, und eine ganze Zahl von 1 bis 200, vorzugsweise 1 bis 60, bevorzugt 1 bis 16, besonders bevorzugt 1 bis 4, ist,
R⁴ R oder ein Wasserstoffatom bedeutet,
und R, a, b, c und d die oben jeweils dafür angegebene Bedeutung besitzen,
in Anwesenheit von Katalysatoren (B), ausgewählt aus der Gruppe der Metalle der VIII. Nebengruppe des Periodensystems und deren Verbindungen,
und in Anwesenheit von Cokatalysatoren (K) ausgewählt aus der Gruppe der organischen Säuren und niedermolekularen siliciumorganischen Hydride mit Wasser (C)
zu Si-OH Gruppen aufweisenden Zwischenprodukten der allgemeinen Formel 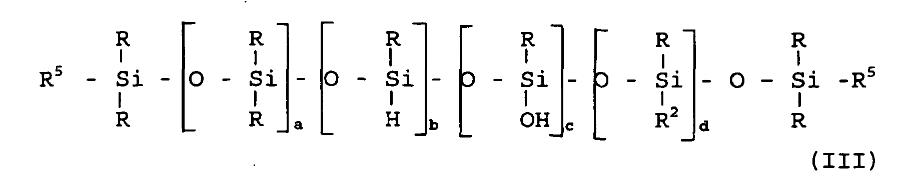 wobei
R⁵ R oder eine HO-Gruppe bedeutet,
und R, a, b, c und d die oben dafür angegebene Bedeutung haben,
umgesetzt werden,
und
(b) in einem zweiten Schritt
die so erhaltenen SiOH-Gruppen aufweisenden Zwischenprodukte
mit Silanen (D), die eine gegenüber SiOH-Gruppen reaktive Gruppe aufweisen,
umgesetzt werden.

2. Verfahren nach Anspruch 1, **dadurch gekennzeichnet, dass** R² ein Alkenylrest R³ ist und b und d jeweils 0 sind.

3. Verfahren nach Anspruch 1 oder 2, **dadurch gekennzeichnet, dass** an Trägermaterialien gebundene Katalysatoren (B) eingesetzt werden.

4. Verfahren nach Anspruch 1, 2 oder 3, **dadurch gekennzeichnet, dass** als Katalysatoren (B) solche ausgewählt aus der Gruppe von Palladium, Platin, Rhodium, Ruthenium und Iridium und deren Verbindungen eingesetzt werden.

5. Verfahren nach Anspruch 3 oder 4, **dadurch gekennzeichnet, dass** als Trägermaterialien solche ausgewählt aus der Gruppe von SiO₂, Al₂O₃, Tonerden, Aktivkohle und organischen Harzen eingesetzt werden.

6. Verfahren nach einem der Ansprüche 1 bis 5, **dadurch gekennzeichnet, dass** als Kataysator (B) an Aktivkohle gebundenes Palladium eingesetzt wird.

7. Verfahren nach einem der Ansprüche 1 bis 6, **dadurch gekennzeichnet, dass** als Si-H Gruppen aufweisende Organopolysiloxane (A) solche der allgemeinen Formel 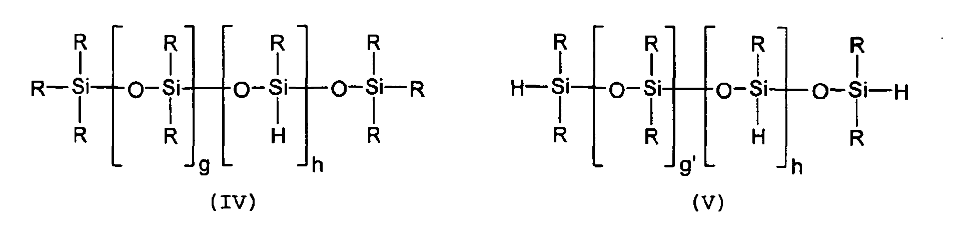 wobei
g 40 bis 1000, vorzugsweise 80 bis 500, bevorzugt 100 bis 200 ist,
g' 38 bis 1000, vorzugsweise 78 bis 500, bevorzugt 98 bis 200 ist,
h 1 bis 6, vorzugsweise 2 bis 4, ist, und
R die in Anspruch 1 dafür angegebene Bedeutung hat,
eingesetzt werden.

8. Verfahren nach einem der Ansprüche 1 bis 7, **dadurch gekennzeichnet, dass** als Cokatalysatoren (K) solche ausgewählt aus der Gruppe von Ameisensäure, Essigsäure, Oxalsäure, Zitronensäure, Ascorbinsäure, Triethylsilan und Tetramethyldisiloxan eingesetzt werden.

9. Verfahren nach einem der Ansprüche 1 bis 8, **dadurch gekennzeichnet, dass** als Silane (D) solche ausgewählt aus der Gruppe der Chlorsilane und Disilazane eingesetzt werden.

10. Verfahren nach einem der Ansprüche 1 bis 9, **dadurch gekennzeichnet, dass** als Silane (D) solche ausgewählt aus der Gruppe von Vinyldimethylchlorsilan, Vinyldimethylethoxysilan und Vinyldimethyldisilazan eingesetzt werden.

11. Verfahren nach einem der Ansprüche 1 bis 10, **dadurch gekennzeichnet, dass** als Triorganosiloxygruppen aufweisende Organopolysiloxane solche der allgemeinen Formel 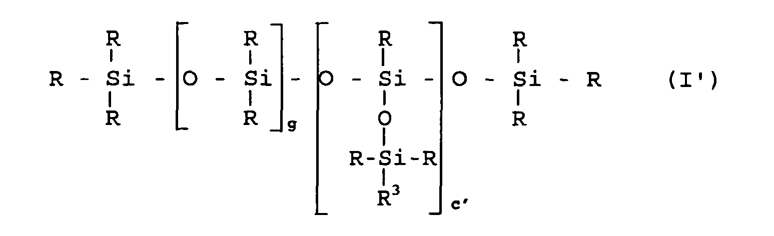 Oder 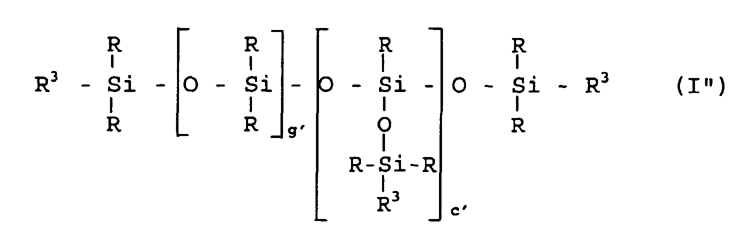
wobei R, R³, die in Anspruch 1 angegebene Bedeutung haben, g und g' die in Anspruch 6 dafür angegebene Bedeutung haben, und
c' 1 bis 6, vorzugsweise 2 bis 4, ist,
erhalten werden.

12. Verfahren nach einem der Ansprüche 1 bis 11, **dadurch gekennzeichnet, dass d**er Rest R³ ein Vinylrest ist.

13. Verfahren nach einem der Ansprüche 1 bis 12, **dadurch gekennzeichnet, dass** der erste und zweite Verfahrensschritt in Gegenwart von Lösungsmitteln (E) bzw. (G) durchgeführt wird.

14. Verfahren nach einem der Ansprüche 1 bis 13, **dadurch gekennzeichnet, dass** im zweiten Verfahrensschritt die Umsetzung unterstützende Hilfsstoffe (F) eingesetzt werden.

15. Verfahren nach einem der Ansprüche 1 bis 14, **dadurch gekennzeichnet, dass** wenn im zweiten Verfahrensschritt als Silane (D) Chlorsilane verwendet werden, als die Umsetzung unterstützende Hilfsstoffe (F) organische Amine eingesetzt werden.

## Claims

1. Process for preparing organopolysiloxanes which have triorganosiloxy groups and are of the general formula 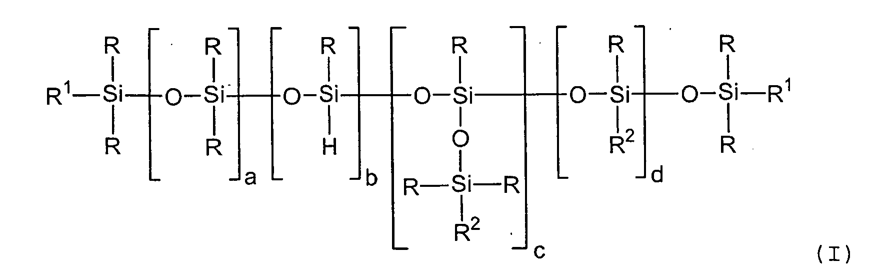
where R is a monovalent, SiC-bonded, optionally substituted hydrocarbon radical which is free of aliphatic carbon-carbon double bonds and has from 1 to 18 carbon atoms,
R¹ is R or R³, and
R² is R or R³, where
R³ is a monovalent, SiC-bonded hydrocarbon radical having a terminal aliphatic carbon-carbon double bond and from 2 to
8 carbon atoms per radical,
a is an integer from 80 to 1000,
b is an integer from 0 to 100,
c is an integer from 1 to 100,
d is an integer from 0 to 100,
by
(a) in a first step, reacting organopolysiloxanes (A) which have SiH groups and are of the general formula 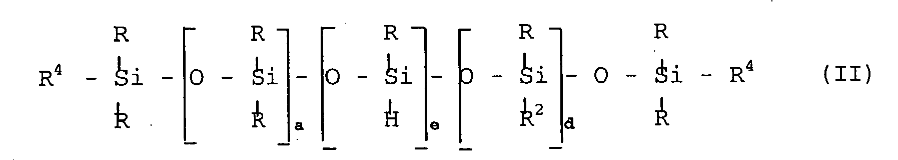 where
e is the sum of b+c and is an integer from 1 to 200, preferably from 1 to 60, preferentially from 1 to 16, more preferably from 1 to 4,
R⁴ is R or a hydrogen atom,
and R; a, b, c and d are each as defined above,
in the presence of catalysts (B) selected from the group of the metals of transition group VIII of the Periodic Table and their compounds,
and in the presence of cocatalysts (K) selected from the group of the organic acids and low molecular weight organosilicon hydrides,
with water (C)
to give intermediates which have Si-OH groups and are of the general formula 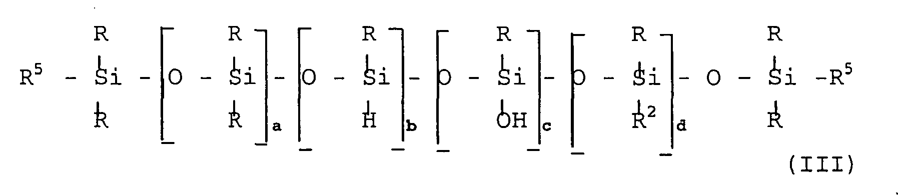 where
R⁵ is R or an HO group,
and R, a, b, c and d are each as defined above,
and,
(b) in a second step,
reacting the intermediates which have SiOH groups and are obtained in this way
with silanes (D) which have a group reactive toward SiOH groups.

2. Process according to Claim 1, **characterized in that** R² is an alkenyl radical R³ and b and d are each 0.

3. Process according to Claim 1 or 2, **characterized in that** catalysts (B) bonded to support materials are used.

4. Process according to Claim 1, 2 or 3, **characterized in that** the catalysts (B) used are those selected from the group of palladium, platinum, rhodium, ruthenium and iridium and their compounds.

5. Process according to Claim 3 or 4, **characterized in that** the support materials used are those selected from the group of SiO₂ Al₂O₃, aluminas, activated carbon and organic resins.

6. Process according to one of Claims 1 to 5, **characterized in that** the catalyst (B) used is palladium bonded to activated carbon.

7. Process according to one of Claims 1 to 6, **characterized in that** the organopolysiloxanes (A) having Si-H groups which are used are those of the general formula 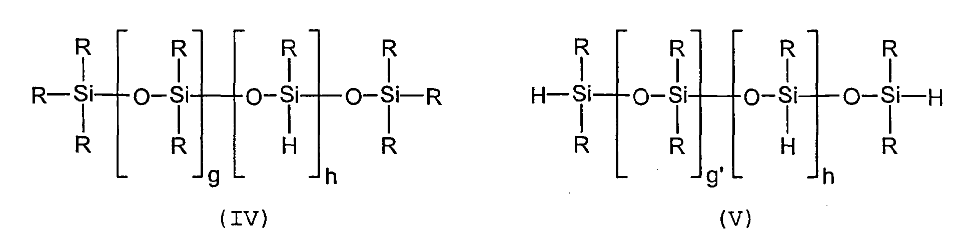 where
g is from 40 to 1000, preferably from 80 to 500, preferentially from 100 to 200,
g' is from 38 to 1000, preferably from 78 to 500, preferentially from 98 to 200,
h is from 1 to 6, preferably from 2 to 4, and
R is as defined in Claim 1.

8. Process according to one of Claims 1 to 7, **characterized in that** the cocatalysts (K) used are those selected from the group of formic acid, acetic acid, oxalic acid, citric acid, ascorbic acid, triethylsilane and tetramethyldisiloxane.

9. Process according to one of Claims 1 to 8, **characterized in that** the silanes (D) used are those selected from the group of the chlorosilanes and disilazanes.

10. Process according to one of claims 1 to 9, **characterized in that** the silanes (D) used are those selected from the group of vinyldimethylchlorosilane, vinyldimethylethoxysilane and vinyldimethyldisilazane.

11. Process according to one of Claims 1 to 10, **characterized in that** the organopolysiloxanes having triorganosiloxy groups which are used are those of the general formula 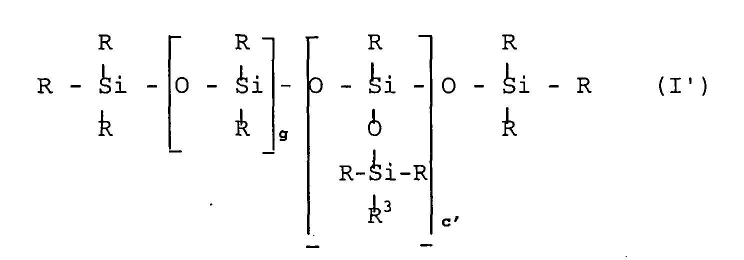 or 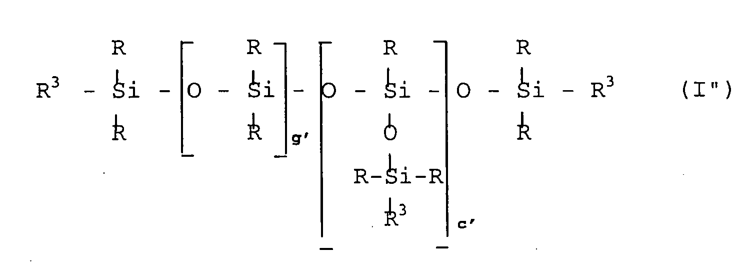
where R, R³ are each as defined in Claim 1,
g and g' are each as defined in Claim 6 and
c' is from 1 to 6, preferably from 2 to 4.

12. Process according to one of Claims 1 to 11, **characterized in that** the R³ radical is a vinyl radical.

13. Process according to one of Claims 1 to 12, **characterized in that** the first and second process steps are carried out in the presence of solvents (E) and (G) respectively.

14. Process according to one of Claims 1 to 13, **characterized in that** assistants (F) supporting the reaction are used in the second process step.

15. Process according to one of Claims 1 to 14, **characterized in that**, when the silanes (D) used in the second process step are chlorosilanes, organic amines are used as assistants (F) supporting the reaction.

## Revendications

1. Procédé de préparation d'organopolysiloxanes contenant des groupes triorganosiloxy, de la formule générale 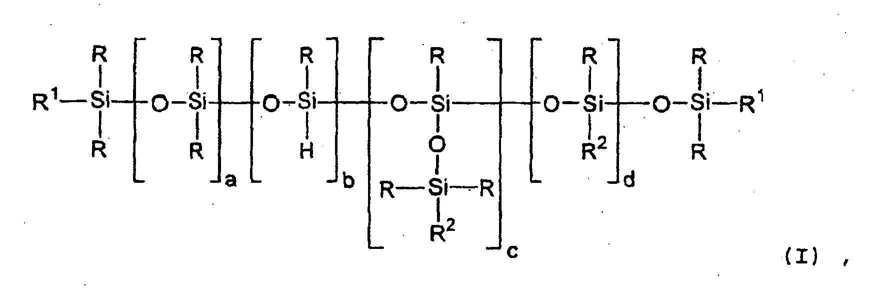
dans laquelle R représente un radical hydrocarboné monovalent, lié à du SiC, exempt de doubles liaisons carbone - carbone aliphatiques, le cas échéant substitué et comportant de 1 à 18 atomes de carbone,
R¹ représente R ou R³, et
R² représente R ou R³, avec
R³ représente un radical hydrocarboné monovalent, lié à du SiC, avec une double liaison carbone - carbone aliphatique terminale et comportant de 2 à 8 atomes de carbone par radical,
a est un nombre entier de 80 à 1000,
b est un nombre entier de 0 à 100,
c est un nombre entier de 1 à 100,
d est un nombre entier de 0 à 100,
et dans lequel
(a) dans une première étape,
on fait réagir des organopolysiloxanes (A) comportant des groupes SiH de la formule générale 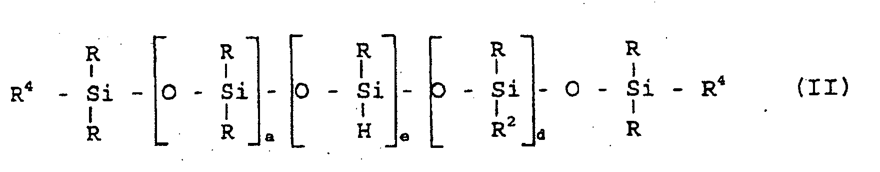
dans laquelle e représente la somme b + c, et est un nombre entier de 1 à 200, de préférence de 1 à 60, préférablement de 1 à 16, plus préférablement de 1 à 4,
R⁴ représente R ou un atome d'hydrogène,
et R, a, b, c et d ont la signification respectivement indiquée pour eux plus haut,
en présence de catalyseurs (B) choisis dans le groupe des métaux du sous-groupe VIII du système périodique et leurs composés,
et en présence de cocatalyseurs (K) choisis dans le groupe des acides organiques et des hydrures organosiliciques à bas poids moléculaire, avec de l'eau (C),
pour former des produits intermédiaires présentant des groupes Si-OH de la formule générale 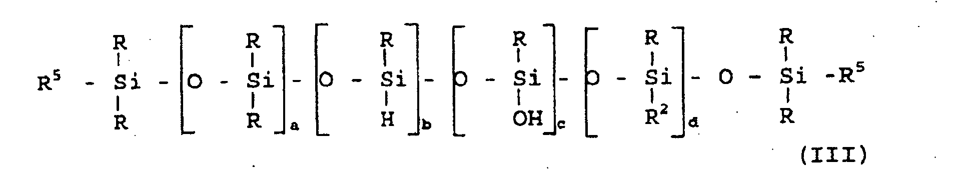 dans laquelle
R⁵ représente R ou un groupe HO,
et R, a, b, c et d ont la signification indiquée pour eux plus haut,
et
(b) dans une deuxième étape,
on fait réagir les produits intermédiaires présentant des groupes SiOH ainsi obtenus avec des silanes (D) présentant un groupe réactif vis-à-vis de groupes SiOH.

2. Procédé suivant la revendication 1, **caractérisé en ce que** R² est un radical alcényle R³ et b et d valent à chaque fois 0.

3. Procédé suivant la revendication 1 ou 2, **caractérisé en ce que** l'on met en oeuvre des catalyseurs (B) liés à des matériaux de support.

4. Procédé suivant la revendication 1, 2 ou 3, **caractérisé en ce que** l'on met en oeuvre en tant que catalyseurs (B) ceux choisis dans le groupe formé par le palladium, le platine, le rhodium, le ruthénium et l'iridium et leurs composés.

5. Procédé suivant la revendication 3 ou 4, **caractérisé en ce que** l'on met en oeuvre en tant que matériaux de support ceux choisis dans le groupe formé par SiO₂, Al₂O₃, des argiles, des charbons actifs et des résines organiques.

6. Procédé suivant l'une quelconque des revendications 1 à 5, **caractérisé en ce que** l'on met en oeuvre en tant que catalyseur (B) du palladium lié à du charbon actif.

7. Procédé suivant l'une quelconque des revendications 1 à 6, **caractérisé en ce que** l'on met en oeuvre en tant qu'organopolysiloxanes (A) présentant des groupes Si-H ceux des formules générales 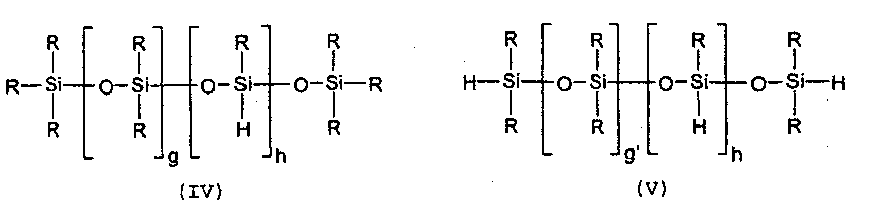 dans lesquelles
g vaut de 40 à 1000, de préférence de 80 à 500, préférablement de 100 à 200,
g' vaut de 38 à 1000, de préférence de 78 à 500, préférablement de 98 à 200,
h vaut de 1 à 6, de préférence de 2 à 4, et
R a la signification indiquée pour lui dans la revendication 1.

8. Procédé suivant l'une quelconque des revendications 1 à 7, **caractérisé en ce que** l'on met en oeuvre en tant que cocatalyseurs (K) ceux choisis dans le groupe formé par l'acide formique, l'acide acétique, l'acide oxalique, l'acide citrique, l'acide ascorbique, le triéthylsilane et le tétraméthyldisiloxane.

9. Procédé suivant l'une quelconque des revendications 1 à 8, **caractérisé en ce que** l'on met en oeuvre en tant que silanes (D) ceux choisis dans le groupe formé par les chlorosilanes et les disilazanes.

10. Procédé suivant l'une quelconque des revendications 1 à 9, **caractérisé en ce que** l'on met en oeuvre en tant que silanes (D) ceux choisis dans le groupe formé par le vinyldiméthylchlorosilane, le vinyldiméthyléthoxysilane et le vinyldiméthyldisilazane.

11. Procédé suivant l'une quelconque des revendications 1 à 10, **caractérisé en ce que** l'on obtient, en tant qu'organopolysiloxanes présentant des groupes triorganosiloxy ceux des formules générales 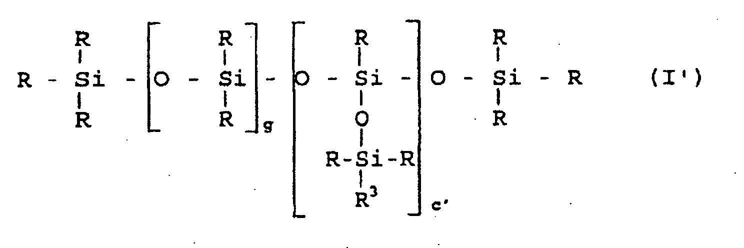 ou 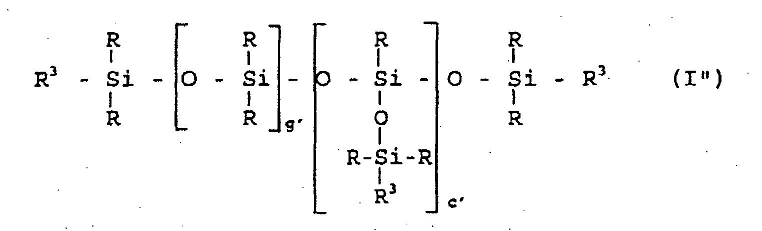
dans lesquelles R, R³ ont la signification indiquée dans la revendication 1,
g et g' ont la signification indiquée pour eux dans la revendication 6, et
c' vaut de 1 à 6, de préférence de 2 à 4.

12. Procédé suivant l'une quelconque des revendications 1 à 11, **caractérisé en ce que** le radical R³ est un radical vinyle.

13. Procédé suivant l'une quelconque des revendications 1 à 12, **caractérisé en ce que** les première et deuxième étapes du procédé sont entreprises en présence de solvants (E) ou (G).

14. Procédé suivant l'une quelconque des revendications 1 à 13, **caractérisé en ce que** l'on met en oeuvre dans la deuxième étape du procédé les adjuvants (F) favorisant la réaction.

15. Procédé suivant l'une quelconque des revendications 1 à 14, **caractérisé en ce que**, lorsque dans la deuxième étape du procédé on utilise des chlorosilanes en tant que silanes (D), on met en oeuvre des amines organiques en tant qu'adjuvants (F) favorisant la réaction.
